# EUROPÄISCHE PATENTSCHRIFT

(11) **EP 0 631 525 B1**
(45) Veröffentlichungstag und Bekanntmachung des Hinweises auf die Patenterteilung: **03.06.1998**
(21) Anmeldenummer: 93920531.6
(22) Anmeldetag: 16.03.1993
(51) Int. Cl.: B05B 13/04, B05B 12/12

(54) **VERFAHREN ZUM AUTOMATISCHEN BESCHICHTEN VON GEGENSTÄNDEN MIT EINER SPRITZVORRICHTUNG**
PROCESS FOR AUTOMATICALLY COATING OBJECTS WITH A SPRAYER
PROCEDE D'ENDUCTION AUTOMATIQUE D'OBJETS AU MOYEN D'UN PULVERISATEUR

(30) Priorität: 21.03.1992 DE 4209279
(43) Veröffentlichungstag der Anmeldung: 04.01.1995
(73) Patentinhaber: CEGELEC AEG Anlagen- und Automatisierungstechnik GmbH, 60528 Frankfurt (DE)
(72) Erfinder: HISSEN, Hans, D-6100 Darmstadt (DE)
(74) Vertreter: Pohl, Herbert, Dipl.-Ing.
(86) Internationale Anmeldenummer: EP9300611
(87) Internationale Veröffentlichungsnummer: WO9318860

(56) Entgegenhaltungen:
- EP-A- 0 084 523
- WO-A-89/06181
- FR-A- 1 323 044
- GB-A- 2 013 934
- GB-A- 2 118 740
- US-A- 4 108 105
- US-A- 4 985 283
- US-A- 5 067 436
- VDI-Z Bd. 122, Nr. 14, Juli 1980, D SSELDORF, BRD Seiten 577 - 581 WERNER KEUL 'Oberfl chentechnik. Hannover-messe 1980'

## Beschreibung

Die Erfindung bezieht sich auf ein Verfahren und eine Vorrichtung zum automatischen Beschichten von Gegenständen mit einer Spritzvorrichtung, die wenigstens ein Spritzwerkzeug enthält, das auf durch Programme festgelegten Bahnen mit einer 3/4-achsigen Vorrichtung bewegt wird, während der jeweilige Gegenstand in einer Richtung transportiert wird.

Einrichtungen zum automatischen Beschichten von Gegenständen sind bekannt. In der DE-C-30 14 114 ist eine solche Einrichtung beschrieben, bei der die zu beschichtenden Gegenstände auf oder an einer Transportvorrichtung durch bestimmte Beschichtungspositionen hindurchgeführt werden. Spritzpistolen sind bei dieser Vorrichtung auf Positionierständern in drei aneinander senkrecht stehenden Richtungen verschieb- und positionierbar angeordnet. Ein Steuergerät enthält ein Programm, durch das die Beschichtungsschritte, die Arten der zu beschichtenden Gegenstände, der Beginn und das Ende des Spritzvorgangs der jeweiligen Spritzpistole und sonstige Beschichtungsparameter festgelegt sind.

Oberflächen, insbesondere von Fahrzeugteilen wie Karosserien werden von 3/4-achsigen Spritzmaschinen beschichtet, die sich z. B. oszillierend über der zu beschichtenden Fläche quer zur Transportrichtung bewegen. Die geeigneten Beschichtungsbewegungen sind durch Programme bestimmt, in denen Bahndaten abgelegt sind, nach denen die Spritzwerkzeuge bewegt werden.

Für die Bahnpunkte der Bewegungsbahn müssen darüberhinaus Beschichtungsparameter bestimmt werden, die sich auf die Steuerung des oder der Spritzwerkzeuge beziehen. Diese Beschichtungsparameter legen z. B. die Farbmenge, die Zerstäuberluft, die Hörnerluft, oder die Stärke und Form des Sprühstrahls fest. Das Bewegungsprogramm einschliesslich der Einstellung der Beschichtungsparameter kann nach dem "Teach-in"-Verfahren erstellt werden. Eine "Off-line"-Programmierung ist wegen der grossen Zahl erforderlicher Bahnpunkte und Beschichtungsparameter, die teilweise voneinander abhängen, mühsam und zeitraubend.

Bei grösseren Objekten sind die Bewegungsprogramme sehr umfangreich und beanspruchen daher eine grosse Speicherkapazität. Wenn mit der gleichen Spritzvorrichtung voneinander verschiedene, grössere Objekte nacheinander beschichtet werden sollen, müssen jeweils die unterschiedlichen Bewegungsprogramme aufgerufen werden. Es kommt vor, dass gleiche Objekte mit verschiedenen Relativgeschwindigkeiten zwischen Spritzwerkzeugen und Objekten beschichtet werden. Im allgemeinen werden dabei die Objekte längs einer Koordinatenrichtung eines kartesischen Koordinatensystems an den Spritzwerkzeugen vorbeibewegt, die beim Beschichten programmgesteuert in den beiden anderen Richtungen des Koordinatensystems bewegt werden. Für verschiedene Relativgeschwindigkeiten müssen die Bewegungsprogramme, die für gleiche Objekte gelten, gegebenenfalls nachträglich geändert werden. Wegen der Vielzahl gespeicherter Bahnpunkte und einzelnen Punkten zugeordneter Bahnparameter ist eine Anpassung des Bewegungsprogramms an verschiedene Geschwindigkeiten, mit denen die Bahn durchlaufen werden soll, besonders umständlich und zeitraubend. Für die Beschichtung gleicher Objekte mit unterschiedlichen Farbmaterialien unterscheiden sich die erforderlichen Bewegungsbahnen und damit die Bewegungsprogramme ebenfalls. Es müssen deshalb für gleiche Objekte aber unterschiedlichen Farbaufträgen verschiedene Bewegungsprogramme erstellt und abgerufen werden, was insbesondere bei grossen Objekten, z. B. Fahrzeugkarossen, einen grossen Aufwand bedeutet. Hier setzt die Erfindung ein.

Mit der Erfindung soll das Problem gelöst werden, mit einem geringen Aufwand an Bewegungsprogrammen und mit weniger Speicherkapazität für die Bewegungsprogramme Objekte auch bei verschiedenen Geschwindigkeiten, mit denen die Objekte in der einen Richtung eines kartesischen KoordinatenSystems an wenigstens einem Beschichtungswerkzeug vorbeibewegt werden, mit einer gewünschten Farbmenge zu beschichten.

Dieses Problem wird erfindungsgemäß dadurch gelöst, daß Programme, mit deen Bewegungsbahnen des Spritzwerkzeugs in Bezug auf vorgegebene Flächen bestimmter Form und Abmessungen geschwindigkeits- und zeitabhängig festgelegt sind, und Konturdaten, mit denen ausgewählte dieser Flächen der Kontur eines zu beschichtenden Gegenstands zugeordnet sind, gespeichert werden und daß bei der Bewegung des zu beschichtenden Gegenstands längs eines am Spritzwerkzeug vorbeiführenden Wegs in Abhängigkeit von der jeweils im Bereich des Spritzwerkzeugs vorhandenen Fläche und der Kontur des Gegenstands die Bewegungsbahnen der Fläche den Konturdaten zur Erzeugung einer resultierenden vom Spritzwerkzeug zurückzulegenden Bahn überlagert werden. Der Maschineneinrichter stellt, z. B. im Teach-in Verfahren, einen Pool

von in Bewegungsprogrammen gespeicherten Maschinenbewegungen zur Verfügung. Diese werden gegenstands- bzw. werkstückabhängig aus einem Speicher abgerufen. An der Beschichtungsmaschine wird das Werkstück kontinuierlich vorbeibewegt. Quer zur Förderrichtung verändern sich dabei die Abmessungen des Gegenstands in vorgegebener Weise. Diese Abstandsänderungen werden der Steuervorrichtung des Spritzwerkzeugs mitgeteilt. Den Abstandsänderungen werden die geschwindigkeits- bzw. zeitabhängigen Bahnbewegungen überlagert, so daß der gewünschte konstante Lackierabstand über der zu beschichtenden Fläche gewährleistet wird.

Das Verfahren hat folgende Vorteile:
Es ist gegenüber den bisherigen Bewegungsprogrammen weniger Speicherkapazität notwendig, so daß auch kleinere Steuersysteme das Verfahren ausführen können. Da Verfahren kann mit einfachen speicherprogrammierbaren Steuerungen durchgeführt werden. Es ist daher keine Robotersteuerung notwendig, jedoch kann mit einer solchen das Verfahren ebenfalls ausgeübt werden.

Das Verfahren ist einfach handhabbar, weil überschaubare Datenmengen anfallen, gegliedert in Bahn- und Konturdaten, die durch geeignete Zugangskontrollen nur von bestimmten Personen verändert werden können, z. B. Bahndaten nur vom Maschinenrichter und Konturdaten nur vom Beschichter, der den laufenden Prozeß überwacht. Es können Bewegungsbahnen für Flächen mit bestimmten Größen, d. h. Abmessungen, gespeichert werden, ohne daß Abstände der Bewegungsbahnen von einer Ebene bereits festgelegt sein müssen, die z. B. senkrecht durch die erste Koordinatenachse verläuft.
Die Bewegungsprogramme für bestimmte Flächen können zur Steuerung der Bewegungsbahnen von Spritzwerkzeugen an anderen Objekten ohne schwierige Anpassungsarbeiten verwendet werden.

Bei vielen Produktgattungen kommen gleiche Flächen häufig vor. Beispielsweise sind an Automobilkarossen unterschiedlicher Typen gleiche oder gleichartig ausgebildete Flächen vorhanden. Für diese zum Teil größere Abmessungen aufweisenden Flächen sind umfangreiche Bewegungsprogramme notwendig, die für mehrere Typen durch einfache Anpassung an die jeweiligen Konturdaten ausgenutzt werden können.

Die Konturlinie wird vorzugsweise durch eine die Fläche schneidende Ebene gebildet, die entweder diejenige Ebene ist, in der ein erste Koordinatenachse und eine zweite, diese rechtwinklig kreuzende und durch den gleichen Ursprung gehende sowie längs der Verschiebungsrichtung des Spritzwerkzeugs gegen das Objekt liegende Koordinatenachse verläuft oder die parallel zu dieser Ebene ist.

Vorzugsweise wird die Bewegungsbahn in Abhängigkeit von der festgestellten Transportgeschwindigkeit der Gegenstände modifiziert. Die von der Transportgeschwindigkeit abhängige Beeinflussung der Spritzwerkzeuggeschwindigkeit erlaubt es, die Transportgeschwindigkeit zu verändern, ohne daß für unterschiedliche Transportgeschwindigkeiten unterschiedliche Bewegungsprogramme zur Verfügung gestellt werden müssen.

Mit der transportgeschwindigkeitsabhängigen Modifikation der von dem oder den Spritzwerkzeugen zurückzulegenden Bahnen wird unter Aufrechterhaltung der gleichen Relativgeschwindigkeit zwischen dem jeweiligen Spritzwerkzeug und der zu beschichtenden Oberfläche ein gleichmäßiger Auftrag unabhängig von der Transportgeschwindigkeit des zu behandelnden Objekts erreicht.

Die Bewegungsbahnen für die jeweilige Fläche sind durch eine Anzahl von Punkten bestimmt, die jeweils auf ein Koordinatensystem bezogen sind und in einer vorgegebenen Reihenfolge vom Spritzwerkzeug bzw. dem Werkzeugträger durchlaufen werden.

Die Koordinatenwerte der Bahnpunkte des für die jeweilige Fläche vorgesehenen Bewegungsprogramms werden wenigstens in einer Koordinatenrichtung in Abhängigkeit von den Abständen vorgegeben, wobei zwischen benachbarten Bahnpunkten zusätzliche Bahnpunkte für die Bewegungsbahn interpoliert werden.

Wenn die zu beschichtenden Flächen bei gleichen Abmessungen nur in Abhängigkeit von der Kontur bei verschiedenen Objekten nur eine andere Lage im Raum aufweisen, ist es zur Anpassung des Bewegungsprogramms an ein anderes, die gleiche Fläche aufweisendes Objekt nur notwendig, die Koordinatenwerte der Bahnpunkte an die andere Lage der Fläche im Raum anzupassen. Objektabhängig ergeben sich dabei vielfach für viele Bahnabschnitte die gleichen Koordinatenänderungen oder z. B. stetige Änderungen nur in einer Koordinatenrichtung bei Beibehaltung der Koordinatenwete in den anderen Richtungen. In diesem Fall ist eine Modifikation besonders schnell und einfach durchführbar.

Vielfach läßt sich die Modifikation des Bewegungsprogramms einer Fläche beim Transport des jeweiligen Objekts dadurch erreichen, daß die Bewegungsbahn des Spritzwerkzeugs in der einen Richtung eines kartesischen Koordinatensystems, die der Transportrichtung entspricht, in Abhängigkeit von der Länge des jeweiligen Gegenstands festgelegt wird und daß die vom Spritzwerkzeug zurückzulegenden Bewegungsbahnen in wenigstens einer rechtwinklig zu dieser Richtung verlaufenden Richtung mittels Korrekturdaten des Gegenstands, die in das Programm eingefügt werden, angepaßt werden. Wenn die Kontur stetig ist, werden auch die Punkte entsprechend angepaßt.

Bei dieser Ausführungsform ist es ebenfalls nicht notwendig, eigene Bewegungsprogramme für jeden Gegenstand einer Reihe von Gegenständen aufzustellen, die wenigstens von einer Seite aus gesehen nur Unterschiede in der Kontur aufweisen. Damit läßt sich auch hier der Programmieraufwand vermindern. Auch wird weniger Speicherplatz für die Software benötigt. Die Erstellung eines Programme für die von einem Spritzwerkzeug bei der Beschichtung einer größeren Fläche zurückzulegenden Bahnen erfordert im allgemeinen einen relativ großen Aufwand. Da hierfür einmal erstellte Bewegungsprogramm wird gemäß der Erfindung konturabhängig modifiziert und kann deshalb für eine Reihe weiterer Gegenstände in modifizierter Form eingesetzt werden.

Besonders einfach ist die Anpassung des Programms, wenn sich Gegenstände jeweils nur in der Breite voneinander unterscheiden.

Die programmierten Bannen müssen dann nur gegenstandsabhängig gegenüber einer mittleren Symmetrieebene der Gegenstände verschoben werden. Es ist aber auch zweckmässig, die Umkehrpunkte der programmierten Bahnen in Abhängigkeit von der vertikalen Ausdehnung im vorgegebenen Programm zu ändern.

Bei einer bevorzugten Ausführungsform wird für einen vorgebbaren Raumpunkt jeweils ein Bahnprogramm beendet und ein anderes davon verschiedenes Bahnprogramm begonnen.

Mit dieser Massnahme können verschiedene Bahnprogramme miteinander gekoppelt werden. Die Kopplung erfolgt an Stellen, an denen gleiche Raumkoordinaten vorhanden sind und zwar in den Wendepunkten der Bahnen. Damit sind ruckfreie übergänge bzw. ruckfreie Maschinenbewegungen möglich.

Für die Vorrichtung wird das Problem erfindungsgemäss dadurch gelöst, dass eine erste speicherprogrammierbare Steuerung vorgesehen ist, mit der die Antriebe der Spritzvorrichtung verbunden sind und in der wenigstens das Bewegungsprogramm gespeichert ist, und dass eine zweite speicherprogrammierbare Steuerung, in der typenabhängig Konturdaten zur Beeinflussung des Bewegungsprogramms sowie Zerstäubungsparameter enthalten sind, an die erste speicherprogrammierbare Steuerung zur Anpassung des Bewegungsprogramms angeschlossen ist.

Zwischen der ersten und der zweiten speicherprogrammierbaren Steuerung findet bei dieser Anordnung eine Aufgabenteilung statt, die eine Reihe von Vorteilen hat.

Die erste speicherprogrammierbare Steuerung ist insbesondere Bestandteil eines Lagesteuer- oder Lageregelkreises für die Spritzeinrichtung und erhält von der zweiten speicherprogrammierbaren Steuerung die Offset-Daten für die konturabhängige Bahnbewegung.

Die Erfindung wird im folgenden anhand eines in einer Zeichnung dargestellten Ausführungsbeispiels näher beschrieben, aus dem sich weitere Einzelheiten, Merkmale und Vorteile ergeben.

Es zeigen:
- Fig. 1: eine schematische perspektivische Darstellung einer Vorrichtung zum automatischen Beschichten von Gegenständen mit einer Spritzvorrichtung;
- Fig. 2: eine andere Ausführungsform einer Vorrichtung zum Beschichten von Gegenständen schematisch von vorne;
- Fig. 3: im Schema eine von der Spritzvorrichtung gemäss Fig. 1 konturabhängig zurückgelegte Bahn;
- Fig. 4: schematisch eine oszillierende Bewegungsbahn und
- Fig. 5: einen Funktionsbaustein für die konturabhängige Bahnsteuerung.

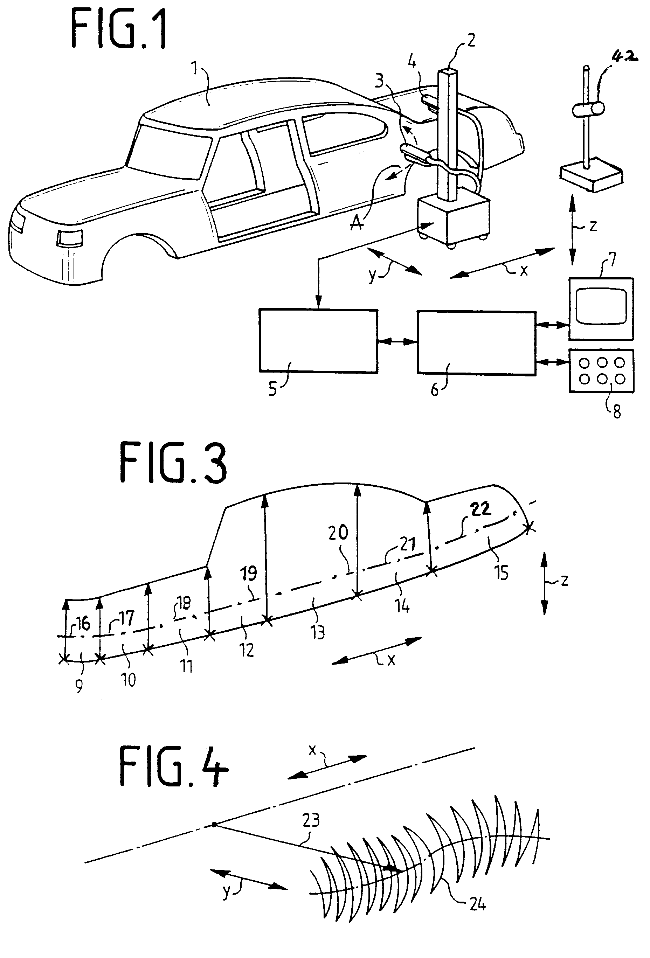

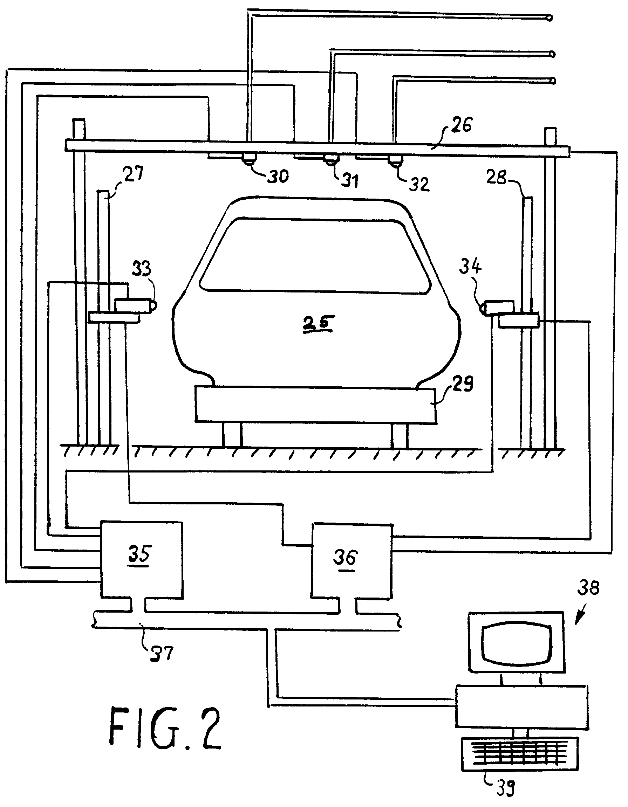

Eine Vorrichtung zum automatischen Beschichten von Fahrzeugkarosserien 1 enthält einen Positionierständer 2, an dem als Spritzwerkzeuge ein oder zwei Zerstäuber 3, 4 in drei Achsen verschiebbar angeordnet sind. Es handelt sich um die in Fig. 1 mit y, z, x bezeichneten Achsen eines kartesischen Koordinatensystems.

Die Zerstäuber 3, 4 versprühen beispielsweise in an sich bekannter Weise Farbe insbesondere elektrostatisch. Hierfür sind die Zerstäuber 3, 4 mit einer nicht dargestellten Farbversorgung verbunden.

Die Fahrzeugkarosserien 1 werden an dem Ständer 2 vorbeibewegt, der nicht näher dargestellte Positionierantriebe trägt, die mit einer ersten speicherprogrammierbaren Steuerung 5 verbunden sind. In der Steuerung 5 ist ein Bahnprogramm gespeichert, da die Bewegung der Zerstäuber 3, 4 festlegt. Die Zerstäuber 3, 4 werden gemäss dem Programm längs einer Bahn z. B. mit oszillierenden Bewegungen geführt, die in Fig. 1 mit A bezeichnet sind, wobei die Fahrzeugkarosserien 1 beschichtet werden.

Die Zerstäuber in Form von Glocken führen Oszillierbewegungen aus, die einer programmierten Bahn überlagert sind, die mit geringer Lackiergeschwindigkeit durchlaufen wird. Es ist auch möglich, Spritzpistolen einzusetzen. Im allgemeinen wird eine Spritzpistole pro Gegenstandsseite vorgesehen. Die Spritzpistole bewegt sich mit höherer Lackiergeschwindigkeit längs der vorgegebenen Bahn ohne Oszillierbewegungen. Die Bahnen können im übrigen an den Rändern des Gegenstands in Abstimmung auf Rundungen an den Rändern gekrümmt sein. Das Bahnprogramm wird im Teach-In-Verfahren hergestellt.

Bei der Verwendung von Glocken sind die Oszillierbewegungen während des Teach-In-Verfahrens bereits den Bahnen eingeprägt, d. h. sie müssen nicht im Teach-In-Verfahren erzeugt werden. Die Glocken oszillieren bei Seitenmaschinen für Fahrzeugkarosserien mit da. 30 - 50 cm Amplituden. An das erste Steuergerät 5 ist ein zweites programmierbares Steuergerät angeschlossen, mit dem ein Monitor 7 und eine Eingabetastatur 8 verbunden sein kann.

Die Fig. 2 zeigt einen Flächenlackierautomaten für Automobilkarossen 25. Es sind im allgemeinen mehrere Flächenlackierautomaten zu einem Automatensatz vereinigt. Der Flächenlackierautomat dem. Fig. 2 besteht aus einer Beschichtungsvorrichtung 26 für das Dach der Karosserie 25 und zwei Beschichtungsvorrichtungen 27, 28 je für eine Seite der Karosserie 25. Für jede Beschichtungsvorrichtung ist eine Bahnsteuerung vorgesehen. Die Antriebe der Beschichtungsvorrichtungen sind nicht näher dargestellt. Die Karosserie 25 wird von einem Förderband 29 transportiert. Die Bahnsteuerungen werden mit dem Förderband 29 synchronisiert.

Auf den programmierbaren Bahnen werden Ein- und Ausschaltstellen für die Farbsprühorgane festgelegt. Die Beschichtungsvorrichtung 26 für das Dach der Karosserie 25 enthält als Farbsprühorgane drei in einer Reihe nebeneinander angeordnete Zerstäuber 30, 31, 32 als Spritzwerkzeuge. Die Beschichtungsvorrichtungen 27, 28 für die Karosserieseiten weisen jeweils Zerstäuber 33, 34 auf. Die Zerstäuber 30 bis 34 weisen jeweils nicht näher bezeichnete Spritzrohre mit daran befestigten Glocken auf. Es sind jeweils Drehantriebe vorhanden, die die Spritzrohre drehen.

Während der Drehbewegungen werden Beschichtungsmaterial und Luft im richtigen Verhältnis und in der richtigen Menge unter Kontrolle einer speicherprogrammierbaren Steuerung 35 den Glocken zugeführt.
Der aus den Glocken austretende Materialfluss kann mittels einer Fliessmengenkontrolle oder -regelung oder einer Zwangsdosierung gesteuert werden. Für die Bewegung der Glocken längs vorgegebener Bahnen ist eine weitere speicherprogrammierbare Steuerung 36 vorgesehen. Beide Steuerungen 35, 36 sind über einen Bus 37 miteinander und mit einem Personal-Computer 38 verbunden.

Die Steuerung 35 ist für technologische Parameter der Beschichtungsvorrichtung massgebend und enthält die entsprechenden Prozessparameter, z. B. Beschichtungsparameter und den Typ der jeweils zu beschichtenden Fahrzeugkarosserie. Die Antriebe der Zerstäuber 34, 35 und die Organe für die Förderung und Dosierung des Beschichtungsmaterials sind ebenfalls mit dem Bus 37 verbunden.

Der Personal-Computer 38 wird unter anderem zur Parametrierung der Flächenlackierautomaten eingesetzt. Hierfür ist ein window-orientiertes Bediensystem vorgesehen, das on-line und off-line verwendet werden kann und als Eingabeeinrichtung eine Tastatur 39, eine Maus und/oder einen Touchscreen enthält.

Für die Parametrierung der verschiedenen Organe des Flächenlackierautomaten sind Programme vorhanden, die mittels eines Menüs aufgerufen werden. Es sind u. a. Programme speziell für die Parametrierung von Geometriedaten, für die Parametrierung von Technologiedaten und für das Spülen der Zerstäuber und deren Zuleitungen bei einem Farbwechsel vorgesehen.

Für die Parametrierung ist es wichtig, dass die Konfiguration des Flächenlackierautomaten bekannt ist. Über die Konfiguration sind entsprechende Daten in Registern des Computers 38 abgelegt. Die Daten beziehen sich auf die Transportgeschwindigkeit, den transportabhängigen Lackierabstand zwischen zwei durch Lackierarbeiten gekennzeichneten Arbeitsbereichen und die Lage der Zerstäuber in bezug auf Start-Nocken, von denen beim Passieren einer Karosserie die Beschichtungsarbeiten ausgelöst werden. Die Dann werden z. B. auf dem Monitor des Computers 38 graphisch dargestellt.

Bei Fahrzeugkarossen aber auch bei anderen zu beschichtenden Objekten kommt es vielfach vor, dass Flächen mit gleichen Abmessungen zwar an verschiedenen Objekten vorhanden aber dort unterschiedliche Raumkoordinaten haben.

Insbesondere für grössere Flächen, die sich auf gekrümmten Oberflächen erstrecken, sind Bewegungsprogramme für die Spritzwerkzeuge mit zahlreichen Bahnpunkten notwendig.

Die Flächen befinden sich z. B. auf den Seitenteilen, der Motorhaube, dem Dach der Fahrzeugkarosserie usw. Die Erstellung solcher Bewegungsprogramme ist relativ aufwendig bzw. zeitraubend. Wenn die Bewegungsprogramme speziell auf einen bestimmten Karosserietyp abgestellt werden, müssen auf jeden anderen Typ die Programme neu abgestimmt werden.
Hierbei spielt auch die Transportgeschwindigkeit des zu beschichtenden Objekts eine Rolle.

Die Erfindung weist einen Weg, wie Bewegungsprogramme von Spritzwerkzeugen, die für Flächen mit bestimmten Abmessungen und bestimmten geometrschen Gestalten aufgestellt sind, bei verschiedenen Objekten eingesetzt werden können; wenn die Flächen bei den verschiedenen Objekten gleich sind aber hinsichtlich der Bezugskoordinaten verschiedene Positionen im Raum einnehmen. Gleiche Flächen mit gleichen geometrischen Gestalten bedeutet, dass die Spritzwerkzeuge gegenüber der Fläche beim Auftragen einer bestimmten Farbe die gleichen Abstände beim Durchlaufen der Bahn haben müssen. Es sind also von den Spritzwerkzeugen die gleichen Bahnen zurückzulegen, die auch von der Geschwindigkeit des Spritzwerkzeugs oder der Spritzwerkzeuge abhängen.

Um die durch ein Bewegungsprogramm für eine Fläche vorgegebenen Bahnen für das Spritzwerkzeug oder die Spritzwerkzeuge für Objekte benutzen zu können, die die gleiche Fläche aber in unterschiedlichen räumlichen Positionen aufweisen ist vorgesehen, dass die Abstände der Bewegungsbahnen von der Fläche in Abhängigkeit von den Abständen einer in Transportrichtung der Objekte verlaufenden Koordinatenachse von mindestens einer Linie auf der Fläche verschoben werden, die in Abhängigkeit von der Gestalt der Fläche gewonnen wird. In einem sehr einfachen Fall, wenn die jeweilige Fläche zwei symmetrische Hälften aufweist, genügt eine Linie, nämlich die Symmetrielinie, die auf der Fläche von einer Ebene geschnitten wird, die entweder in der Ebene zweier sich kreuzender Koordinatenachsen eines kartesischen Koordinatensystems liegt oder zu dieser Ebene parallel ist.

Welche Ebene ausgewählt wird, hängt von der Wahl der Lage des Koordinatensystems in Bezug auf das zu beschichtende Objekt und damit auf die zu beschichtende Fläche ab.

Entsprechend dieser Symmetrielinie werden die Bahnen für das Spritzwerkzeug oder die Spritzwerkzeuge verschoben.

Die Verschiebung der Bahnen geschieht durch die symmetrielinienabhängige Modifikation der durch das Programm festgelegten, vom Spritzwerkzeug oder den Spritzwerkzeugen anzufahrenden Bahnpunkte. Die Modifikation erfolgt während der Bewegung der Objekte in Abhängigkeit von der durch Sensoren festgestellten Lage des Objekts in Bezug auf die Spritzvorrichtung. Durch den oder die Sensoren wird auch die Transportgeschwindigkeit des jeweils zu beschichtenden Objekts festgestellt. Die Bahnpunkte werden unter Berücksichtigung der Transportgeschwindigkeit des Objekts bestimmt. Die Bestimmung der jeweiligen Bahnpunkte erfolgt durch einen Prozessor und wird danach in Positioniersignale für die Antriebe des Spritzwerkzeugs oder der Spritzwerkzeuge umgesetzt.

Wenn eine Symmetrielinie oder eine auf die Ebene der sich kreuzenden Koordinatenachsen bezogene Linie auf der Fläche für die Modifikation der Bahnpunkte der programmierten Bewegungsbahn ausreicht, dann müssen nicht alle Koordinatenwerte der Bahnpunkte sondern nur die Koordinatenwerte in Richtung senkrecht zur Transportrichtung modifiziert werden. Dies lässt sich mit einem Prozessor relativ schnell on-line durch Abtastung der vorab festgelegten Symmetrielinie durchführen. Die Symmetrielinie kann auch als Kontur der Bahn bezeichnet werden.

Gegebenenfalls ist es notwendig, mehrere Linien für die zu beschichtenden Flächen festzulegen. Diese Linien liegen in parallelen Ebenen, die z. B. gleiche Abstände voneinander haben. Die Ebene sind parallel zu der durch zwei Koordinatenachsen verlaufenden Ebene. Eine der Koordinatenachsen verläuft dabei in Transportrichtung der Objekte, während die andere rechtwinklig dazu in der Horizontalen liegt.

Die Bewegungsbahnpunkte werden so modifiziert, dass die Beschichtungsgeschwindigkeit auf der Oberfläche, unabhängig von der Transportgeschwindigkeit und der Lage der jeweiligen Fläche im Raum, immer gleich ist.

Im Steuergerät 6 sind technologische Daten für die jeweils zu beschichtende Fahrzeugkarosserie 1 gespeichert. Diese Daten beziehen sich z. B. auf Prozessparameter, z. B. Beschichtungsparameter und den Typ der Fahrzeugkarosserie.

Mit der in Fig. 1 dargestellten Vorrichtung können Fahrzeugkarosserien für unterschiedliche Typen beschichtet werden. Im Programm des Steuergeräts 6 ist festgelegt, wann ein Beschichtungs- oder Arbeitsschritt beginnen und enden soll und wie lange der Vorgang dauert. Es kann sich um einen taktweise gesteuerten Beschichtungsvorgang handeln. Ferner ist ein Programm enthalten, das ausgibt, welche der Zerstäuber 3, 4 zu welchem Zeitpunkt betätigt werden.

Weiterhin sind Daten über die Spannung für das elektrische Beschichtungsfeld, die Durchsatzmenge je Zeiteinheit, die Luftmenge und die Drehzahl vorhanden. Weitere Daten betreffen die Farbe bzw. Pulversorte und die Typen. Das Steuergerät 5 enthält Daten über die y-, z-, x-Achsenposition der Zerstäuber 3, 4 und die Grösse der Lackiergeschwindigkeit.

Die Fig. 3 zeigt schematisch Elemente oder Flächen, aus denen sich eine Bahn für eine zu beschichtende Fahrzeugkarosserie zusammensetzt. Die Flächen können auf geometrisch verschiedenen Oberflächen liegen. In Richtung der x-Achse sind entsprechend der verschiedenen Flächen der Fahrzeugkarosserie 1 eine Reihe von einzelnen Bewegungsprogrammen 9, 10, 11, 12, 13, 14, 15 vorhanden, durch die Oszillierbewegungen der Spritz- oder Sprühpistolen 3, 4 festgelegt werden.

Die Programme sind in Fig. 3 durch die zugeordneten Flächen der Fahrzeugkarosse gekennzeichnet. Die Bewegungsprogramme enthalten Bahnpunkte, die von den Spritzwerkzeugen anzufahren sind. Die Daten zur Modifikation der Bahnpunkte sind in einem gesonderten Programm abgelegt. Im jeweiligen Programm sind Vorkehrungen getroffen, dass die Grösse der Oszillierbewegungen konturabhängig verändert werden kann. Deshalb können die gleichen Programme für verschiedene Fahrzeugtypen verwendet werden, die sich im wesentlichen in der Kontur voneinander unterscheiden. Fahrzeuge verschiedener Typen enthalten vielfach zu beschichtende Flächen, die eben oder schwach gekrümmt sind und mit den gleichen Oszillierbewegungen beschichtet werden können. Lediglich die Abmessungen dieser Flächen unterscheiden sich von Fahrzeugtyp zu Fahrzeugtyp.
Es werden deshalb die gleichen Programme verwendet, deren Oszillierbewegungen durch einen typenabhängigen Offset beeinflusst werden.

Dieser typenabhängige Offset wird dem Steuergerät 6, das die Positionierung der Spritzpistolen 3, 4 durchführt, vom Steuergerät 5 aus vorgegeben.

Die Programme 9 bis 15 sind jeweils für die Beschichtung von Flächen, die gleich den an der Fahrzeugkarosse vorhandenen entsprechenden Flächen sind, nach einer Modifikation der Bahnpunkte der Spritzwerkzeugbewegungsbahnen geeignet.

Es sei angenommen, dass sich die Seitenflächen, die beim Beschichten eines Fahrzeugs mit dem oder den Spritzwerkzeugen nacheinander an der Spritzvorrichtung vorbeilaufen, nur in der in Fig. 4 mit y bezeichneten Achse voreinander unterscheiden. Die Modifikation der Bannpunkte der Bewegungsbahnprogramme 9 bis 15 kann dann durch Änderung der Y-Koordinatenwerte der Bahnpunkte erfolgen. Die Modifikation der einzelnen Bahnpunkte geschieht mittels sog. Offsets, die Abständen der Bahnpunkte in Y-Koordinatenrichtung von einer Bezugslinie X-Koordiantenrichtung entsprechen.

Die Fig. 3 zeigt die verschiedenen Offsets 16, 17, 18, 19, 20, 21, 22 der Bewegungsbahnen gegenüber einer Bezugsachse des Spritzwerkzeugs zu den verschiedenen Programmen 9 bis 15. Innerhalb eines Programms wird der Offset z. B. stetig nach einer vorgegebenen Funktion geändert. Weiterhin ist ein stetiger übergang zwischen verschiedenen Programmen möglich. Die Offsets legen eine Fahrzeugkontur in einer Ebene fest, die parallel zur Ebene liegt, in der sich die X-Y-Koordinatenachsen kreuzen. Die Fig. 4 zeigt für ein Programm einen Offset 23 in y-Richtung und eine Oszillierbahn 24, mit der Z. B. an einer Fahrzeugkarosserie der Bereich zwischen Seitenteil und Dach beschichtet werden soll. Der Offset 23 wird vorzugsweise direkt aus einem CAD-System übernommen, das bei der Konstruktion eingesetzt ist.

Da vielfach für die stetige Bewegung des Jeweiligen Zerstäubers nur eine Bann und eine typenbezogene Kontur erforderlich sind, werden Off-Line-Programmiereinrichtungen nicht benötigt.

Die Bahnprogramme werden wegabhängig von dem zweiten Steuergerät 6 aufgerufen. Die Oszillierbewegungen finden z. B. in der y-Ebene statt.

Die Zerstäuber 30 bis 34 werden mit entsprechenden Bewegungsprogrammen gesteuert. Die Modifikation der Bahnpunkte der Bewegungsprogramme 9 bis 15 geschieht geschwindigkeitsabhängig.
Ein Sensor 42 stellt einerseits die Position der Fahrzeugkarosse 1 in bezug auf die Spritzwerkzeuge 3, 4 bzw. deren Position in einer horizontalen Bezugsebene, die quer zur Transportrichtung verläuft, fest. Weiterhin ist eine Geschwindigkeitserfassungseinrichtung vorgesehen, die z. B. die Transportgeschwindigkeit an einer Stelle feststellt. Anhand der Geschwindigkeit wird berechnet, wann die verschiedenen zu beschichtenden Flächen an der Spritzvorrichtung ankommen. Zu den entsprechenden Zeitpunkten werden die Bahnprogramme 9 bis 15 aktiviert. Die Modifikation des Offsets geschieht nicht nur in Abhängigkeit des Abstands der Linien 16 bis 22 von einer Bezugslinie in X-Koordinatenrichtung sondern auch geschwindigkeitsabhängig. Dies bedeutet, dass in Abhängigkeit von der Geschwindigkeit zum Zweck eines gleichen Farbauftrags auf der Karosserie 1 die Oszillierbahnen sich ändern.

Die auf den Offset 16 bis 22 bezogenen Daten sind in einem gesonderten Programm enthalten und werden in Abhängigkeit von der Lage der jeweils zu beschichtenden Fläche in Bezug auf die Spritzvorrichtung abgerufen. Die Modifikation der Bewegungsbahnen geschieht ferner in Abhängigkeit von der Farbe bzw. der Konsistenz der Farbe. Manche Farben verlangen für eine gleichmässige Beschichtung andere Abstände der Spritzwerkzeuge von den zu beschichtenden Flächen. Dies wird über den Offset eingestellt. Mit dem Bewegungsprogramm kann auch eine Modifikation der Bewegungsbahnen in bezug auf deren Umkehrpunkte erfolgen.

Bei Gegenständen, wie Fahrzeugkarossen, liegen beispielsweise die Umkehrpunkte der Spritzwerkzeugbahnen an den unteren Rändern fest und in einer Linie, während die oberen Umkehrpunkte kontaktabhängig sind. Es ist dann möglich, auch die oberen Umkehrpunkte in Abhängigkeit vom Abstand von der Linie der unteren Umkehrpunkte einzustellen, wobei die oberen Umkehrpunkte durch die vertikalen Abmessungen der zu beschichtenden Flächen bestimmt werden. In Fig. 3 sind die oberen Umkehrpunkte durch nicht näher bezeichnete Pfeile markiert.

Der Umriss des Fahrzeugs in der senkrechten Ebene, d. h. das auf eine senkrechte Ebene projizierte Fahrzeug legt daher ebenfalls eine Kontur fest, mit der die Umkehrpunkte eingestellt werden, indem z. B. die Punkte auf der oberen Kurve des Umrisses ausgewählt und mit einem Zuschlag als Umkehrpunkte in das Bewegungsprogramm eingesetzt werden. Die Farbzufuhr wird dann abgeschaltet, wenn die Spritzwerkzeuge über den durch den Umriss vorgegebenen Bahnpunkt hinausbewegt werden.

Der Typ der jeweiligen Fahrzeugkarosse wird entweder vor dem Einlaufen in die jeweilige Spritzvorrichtung von Hand in die Steuerung eingegeben oder automatisch durch Abtastung eines Codes der Steuerung gemeldet. Anhand der Typinformation wählt dann die Steuerung die Bewegungsprogramme und die Konturdaten aus, mit denen die Bahndaten modifiziert werden.

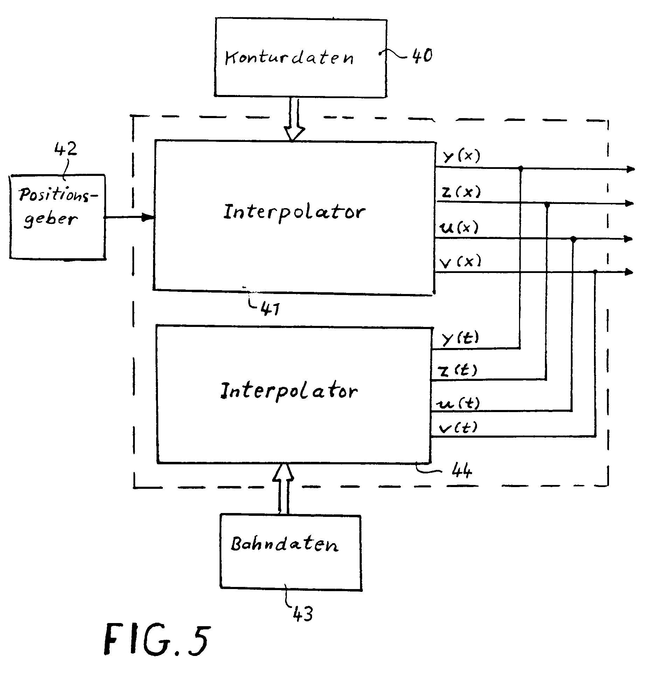

Die Fig. 5 zeigt einen Funktionsbaustein für die Bahnsteuerung. Die für die Gegenstände festgelegten 3/4-D-Konturdaten sind in einem Baustein 40 enthalten und werden einem Interpolator 41 zugeführt, der positionsabhängig mit einem die Gegenstandspositionen erfassenden Sensor 42 gesteuert wird.

Die Bahndaten der Bewegungsbahn sind in einem 3/4-D-Bahndatenspeicher 43 enthalten und werden einem Interplator 44 zugeführt, der eine geschwindigkeits- bzw. zeitabhängige Interpolation ausführt. Der Interpolator 41 gibt Stellsignale für die Bewegungen in z. B. vier Achsen aus. Die Stellsignale sind mit y(x), y(x), u(x) und v(x) bezeichnet.

Der Interpolator 44 gibt ebenfalls Stellsignale für die Bewegungen in den vier Achsen aus, die mit y(t), z(t), u(t) und v(t) bezeichnet sind.

Die den jeweiligen Achsen zugeordneten Signale der Interpolation werden einander überlagert und an die Antriebe der Beschichtungsmaschine ausgegeben.

## Patentansprüche

1. Verfahren zum automatischen Beschichten von Gegenständen mit einer Spritzvorrichtung, die wenigstens ein Spritzwerkzeug enthält, das auf durch Programme festgelegten Bahnen mit einer 3/4-achsigen Vorrichtung bewegt wird, während die Gegenstände in einer Richtung bewegt werden,
**dadurch gekennzeichnet,**
daß Programme, mit denen Bewegungsbahnen des Spritzwerkzeugs in bezug auf vorgegebene Flächen bestimmter Form und Abmessungen geschwindigkeits- und zeitabhängig festgelegt sind, und Konturdaten, mit denen ausgewählte dieser Flächen der Kontur eines zu beschichtenden Gegenstands zugeordnet sind, gespeichert werden und daß bei der Bewegung des zu beschichtenden Gegenstands längs eines am Spritzwerkzeug vorbei führenden Wegs in Abhängigkeit von der jeweils im Bereich des Spritzwerkzeugs vorhandenen Fläche und der Kontur des Gegenstands die Bewegungsbahnen der Fläche den Konturdaten zur Erzeugung einer resultierenden vom Spritzwerkzeug zurückzulegenden Bahn überlagert werden.

2. Verfahren nach Anspruch 1,
**dadurch gekennzeichnet,**
daß für Objekte, die Flächen enthalten, die vom Spritzwerkzeug mit in bezug auf die Abmessungen und die Form der Flächen festgelegten, gleichen Bewegungsbahnen zu beschichten sind, die Abstände der vom Spritzwerkzeug zurückzulegenden Bewegungsbahnen gegenüber den Flächen durch Bahnpunktkoordinaten bestimmt werden, die von den Abständen wenigstens einer Konturlinie auf der jeweiligen Fläche gegenüber einer in Transportrichtung der Objekte verlaufenden Koordinatenachse abhängen.

3. Verfahren nach Anspruch 2,
**dadurch gekennzeichnet,**
daß die Konturlinie durch eine die Fläche schneidende Ebene gebildet wird, die entweder diejenige Ebene ist, in der eine erste Koordinatenachse und eine zweite, diese rechtwinklig kreuzende und durch den gleichen Ursprung gehende sowie längs der Verschiebungsrichtung des Spritzwerkzeugs gegen das Objekt liegende Koordinatenachse verläuft oder die parallel zu dieser Ebene ist.

4. Verfahren nach einem oder mehreren der vorhergehenden Ansprüche,
**dadurch gekennzeichnet,**
daß die Bewegungsbahnen in Abhängigkeit von der festgestellten Transportgeschwindigkeit der Gegenstände modifiziert werden.

5. Verfahren nach einem oder mehreren der Ansprüche 2 bis 4,
**dadurch gekennzeichnet,**
daß die Koordinatenwerte der Bahnpunkte des für die jeweilige Fläche vorgesehenen Bewegungsprogramms wenigstens in einer Koordinatenrichtung in Abhängigkeit von den Abständen vorgegeben werden und daß zwischen benachbarten Bahnpunkten zusätzliche Bahnpunkte für die Bewegungsbahn des Spritzwerkzeugs interpoliert werden.

6. Verfahren nach einem oder mehreren der vorhergehenden Ansprüche 2 bis 5,
**dadurch gekennzeichnet,**
daß die Bewegungsbahn des Spritzwerkzeugs mit einem Programm in der einen Richtung eines kartesischen Koordinatensystems, die der Transportrichtung entspricht, in Abhängigkeit von der Länge des jeweiligen Gegenstands festgelegt wird und daß die vom Spritzwerkzeug zurückzulegenden Bewegungsbahnen in wenigstens einer rechtwinklig zu dieser Richtung verlaufenden Richtung mittels Konturdaten des Gegenstands, die in das Programm eingefügt werden, angepaßt werden.

## Claims

1. Method for automatically coating objects with a spraying device which includes at least one spraying tool that is moved along paths with a 3/4-axis device according to programs, while the objects are moved in one direction, characterised in that programs with which movement paths of the spraying tool are determined as a function of speed and time with respect to predetermined surfaces of particular form and dimensions, as well as contour data with which selective surfaces of said surfaces are related to the contour of an object to be coated, are stored, and that, during the movement of the object to be coated along a path leading past the spraying tool, there are superimposed on the contour data, as a function of the respective surface present in the area of the spraying tool and the contour of the object, the movement paths of the surface, in order to generate a resulting path to be covered by the spraying tool.

2. Method according to claim 1, characterised in that for objects which include surfaces to be coated by the spraying tool with identical movement paths determined with respect to the dimensions and the shape of the surfaces, the spacings of the movement paths relative to the surfaces that are to be covered by the spraying tool are determined by path point coordinates which are dependent on the spacings of at least one contour line on the respective surface with respect to a coordinate axis extending in the transport direction of the objects.

3. Method according to claim 2, characterised in that the contour line is formed by a plane cutting the surface, said plane being either the plane in which lie a first coordinate axis and a second coordinate axis that intersects the latter at right angles and passes through the same point of origin and lies along the direction of displacement of the spraying tool with respect to the object, or is parallel to said plane.

4. Method according to one or more of the foregoing claims, characterised in that the movement paths are modified as a function of the determined transport velocity of the objects.

5. Method according to one or more of claims 2 to 4, characterised in that the coordinate values of the path points of the movement program provided for the respective surface are predetermined in at least one coordinate direction as a function of the spacings, and that additional path points for the movement path of the spraying tool are interpolated between adjacent path points.

6. Method according to one or more of the foregoing claims 2 to 5, characterised in that the movement path of the spraying tool is determined with a program, as a function of the length of the respective object, in the one direction of a cartesian coordinate system which corresponds to the transport direction, and that the movement paths to be covered by the spraying tool are adjusted in at least one direction extending perpendicular to this direction by means of contour data on the object which are loaded into the progress.

## Revendications

1. Procédé pour l'enduction automatique d'objets avec un pulvérisateur qui contient au moins un outil de pulvérisation, qui est déplacé sur des trajectoires définies par des programmes avec un dispositif à 3/4 axes, tandis que les objets sont déplacés dans une direction, caractérisé en ce qu'on stocke des programmes, avec lesquels des trajectoires de déplacement de l'outil de pulvérisation sont définies en fonction de la vitesse et du temps par rapport à des surfaces prédéterminées de forme et dimensions définies, et des données de contour, avec lesquelles certaines de ces surfaces sont attribuées au contour d'un objet à enduire, et que, lors du déplacement de l'objet à enduire le long d'un chemin passant devant l'outil de pulvérisation en fonction de le surface respectivement présente dans la zone de l'outil de pulvérisation et du contour de l'objet, les trajectoires de mouvement de la surface sont superposées aux données de contour pour générer une trajectoire résultante à parcourir par l'outil de pulvérisation.

2. Procédé selon la revendication 1, caractérisé en ce que pour des objets, qui contiennent des surfaces qui doivent être enduites par l'outil de pulvérisation avec. des trajectoires de déplacement identiques et définies au niveau des dimensions et de la forme des surfaces, les espacements des trajectoires de déplacement à parcourir par l'outil de pulvérisation par rapport aux surfaces sont déterminés par des coordonnées de point de trajectoire, qui dépendent des distances d'au moins une ligne de contour dur la surface respective par rapport à un axe de coordonnées allant dans le sens de transport des objets.

3. Procédé selon la revendication 2, caractérisé en ce que la ligne de contour est formée par un plan coupont la surface qui soit est le plan, lequel est traversé par un premier axe de coordonnées et un deuxième axe de coordonnées, croisant le premier et passant par la même origine, et situé le long du sens de déplacement de l'outil de pulvérisation vers l'objet, soit est parallèle à ce plan.

4. Procédé selon l'une ou plusieurs des revendications précédentes, caractérisé en ce que les trajectoires de mouvement sont modifiées en fonction de la vitesse de transport constatée des objets.

5. Procédé selon une ou plusieurs des revendications 2 à 4, caractérisé en ce que les valeurs de coordonnées des points de trajectoire du programme de mouvement prévu pour la surface concernée sont prédéfinies au moins dans un sens de coordonnées en fonction des espacements et que des points de trajectoire supplémentaires pour la trajectoire de mouvement de l'outil de pulvérisation sont interpolés entre des points de trajectoire voisins.

6. Procédé selon une ou plusieurs des revendications 2 à 5 précédentes, caractérisé en ce que la trajectoire de mouvement de l'outil de pulvérisation est définie en fonction de la longueur de l'objet concerné avec un programme dans une direction d'un système de coordonnées cartésien, qui correspond au sens de transport, et que les trajectoires de mouvement à parcourir par l'outil de pulvérisation sont adaptées dans au moins une direction perpendiculaire à cette direction au moyen de données de contour de l'objet, qui sont insérées dans le programme.
